# EUROPÄISCHE PATENTSCHRIFT

(11) **EP 1 623 201 B1**
(45) Veröffentlichungstag und Bekanntmachung des Hinweises auf die Patenterteilung: **17.01.2007**
(21) Anmeldenummer: 04760768.4
(22) Anmeldetag: 04.05.2004
(51) Int. Cl.: G01M 1/04

(54) **VERFAHREN UND LAGERUNG ZUM AUSWUCHTEN VON ZAPFENLOSEN ROTOREN**
METHOD AND BEARING FOR BALANCING ROTORS WITHOUT JOURNALS
PROCEDE ET PALIER POUR EQUILIBRER DES ROTORS SANS TOURILLONS

(30) Priorität: 13.05.2003 DE 10321606
(43) Veröffentlichungstag der Anmeldung: 08.02.2006
(73) Patentinhaber: Schenck RoTec GmbH, 64293 Darmstadt (DE)
(72) Erfinder: THELEN, Dieter, 64397 Modautal (DE)
(74) Vertreter: Haar, Lucas Heinz Jörn
(86) Internationale Anmeldenummer: PCT/DE2004/000941
(87) Internationale Veröffentlichungsnummer: WO 2004/102147

(56) Entgegenhaltungen:
- EP-A- 0 104 266
- CH-A- 500 480
- US-A- 3 570 278

## Beschreibung

Die Erfindung betrifft ein Verfahren zum Auswuchten von zapfenlosen Rotoren nach dem Oberbegriff des Patentanspruchs 1 und eine Lagerung mit einem Lagerdorn zum Lagern eines zapfenlosen, eine Bohrung aufweisenden Rotors in einer Auswuchteinrichtung nach dem Oberbegriff des Patentanspruchs 7.

Einen Rotor mit Zapfen kann man in Bezug auf seine Lagerstellen, die an den Zapfen angeordnet sind, genau auswuchten. Auszuwuchtenden Rotoren ohne eigene Lagerstellen, die beim Auswuchten auf eine Hilfswelle aufgespannt werden, bereiten Probleme in Hinblick auf die erzielbare Auswuchtgüte.

Aus der EP 0 104 266 A1 ist ein Verfahren bekannt, mit dem zapfenlose Rotoren ohne Hilfswelle mit hoher Auswuchtgüte ausgewuchtet werden können. Dazu wird der Rotor auf einen Lagerdorn einer Auswuchtmaschine aufgebracht und Lagerungsfluid zwischen einander gegenüberliegende Rotor- und Dornlagerflächen gebracht. Fehler, hervorgerufen durch Oberflächenungenauigkeiten, treten nicht mehr in Erscheinung, da Formabweichungen der Rotorbohrung oder des Lagerdorns integriert werden und eine stabile Drehachse des Rotors gegeben ist. In Achsrichtung ist der Rotor mit einer Ringfläche an einer ringförmigen Abstützfläche des Lagerdorns abgestützt. Dies kann beispielsweise bei Planschlagfehlern zu weniger genauen Meßergebnissen führen.

Der Erfindung liegt die Aufgabe zugrunde, ein Verfahren und eine Lagerung zum Auswuchten von zapfenlosen Rotoren zu schaffen, mit denen die Unwucht von zapfenlosen Rotoren mit hoher Genauigkeit ermittelt werden kann.

Erfindungsgemäß wird diese Aufgabe mit den Merkmalen der Patentansprüche 1 und 7 gelöst.

Die Erfindung nutzt erstmals gezielt den Überdruck aus, der sich beim Auswuchten von zapfenlosen Rotoren ohne durchgehende Lagerbohrung in der Lagerbohrung über dem Lagerdornende durch z. B. das aus dem Lagerspalt austretende Fluid aufbaut. Bisher hat man den Aufbau eines Überdrucks durch Entlastungsbohrungen unterbunden. Erfindungsgemäß wird der Überdruck gezielt dazu genutzt, das Rotorgewicht zu tragen.

Der Rotor rotiert auf dem Lagerdorn in einer bezüglich der Achsrichtung vorbestimmten unveränderlichen Lage. Eine aufwendige separate Lagerung des Rotors in Achsrichtung entfällt. Damit ist auch sichergestellt, daß der Rotor frei von einem flächigen Kontakt an einem Axiallager rotiert. Der Rotor läuft ruhiger, was die Auswuchtgüte verbessert.

In vorteilhafter Weise können nach der Lehre der Erfindung alle Rotoren ohne eigene Lagerzapfen, die Sacklochbohrungen oder durchgehende Bohrungen aufweisen wie beispielsweise Verdichterräder, Schwungräder etc. ausgewuchtet werden; durchgehende Rotorbohrungen werden dabei zum Auswuchtvorgang mit einem Verschlußstopfen verschlossen, so daß sich nach dem Aufsetzen des Rotors auf den Lagerdorn ein Fluidpolster aufbauen kann.

Zur Abstützung des Rotors in radialer Richtung kann ein anderes Fluid als zur Abstützung in Achsrichtung eingesetzt werden. Zum Beispiel kann für die radiale Abstützung Flüssigkeit als Fluid verwendet werden und für die axiale Abstützung ein gasförmiges Medium, vorzugsweise Luft. Besonders einfach in Hinblick auf den Aufbau der Unwuchtmesseinrichtung ist die Verwendung nur eines Fluids für beide Lagerbereiche. Besonders vorteilhaft erfolgt die Fluidzufuhr und Fluidabfuhr durch im Inneren des Lagerdorns verlaufende Leitungen. Verwendet man Flüssigkeit als Fluid, erreicht man so einen nahezu vollständig gekapselten Flüssigkeitskreislauf.

Die Erfindung wird nachfolgend anhand von Ausführungsbeispielen näher erläutert. Es zeigen:
- Figur 1: eine Lagerung mit einem Lagerdorn für einen eine Sacklochbohrung aufweisenden Rotor in einer Auswuchteinrichtung in schematischer Darstellung,
- Figur 1a: eine Einzelheit der Lagerung nach Figur 1,
- Figur 2: den Lagerdorn in einer Schnittdarstellung längs der Linie II - II in Figur 1 a und
- Figur 3: eine Schnittdarstellung des Lagerdorns längs der Linie III -III in Figur 1a.

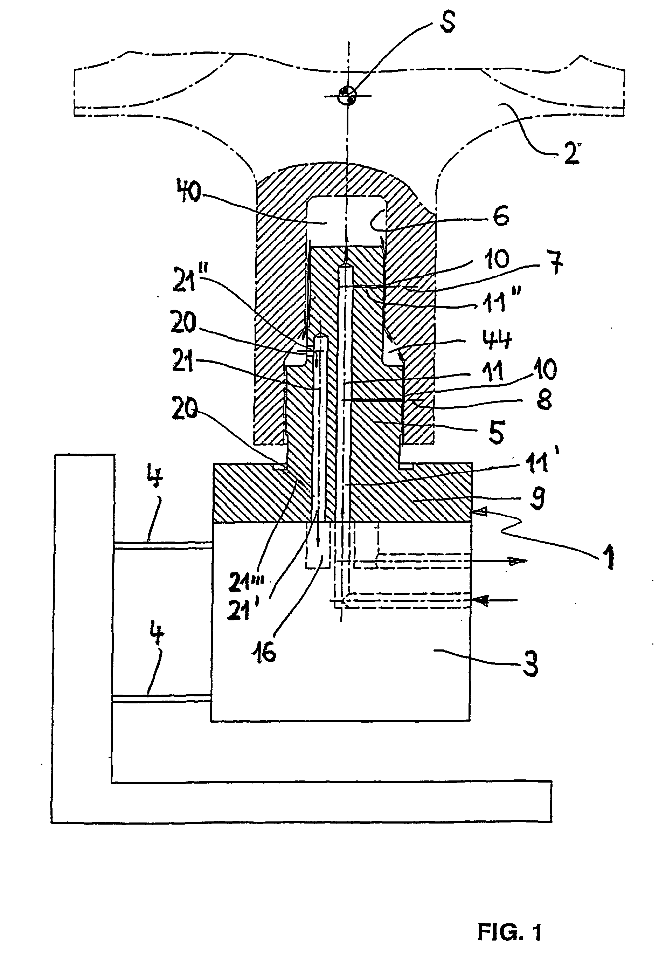

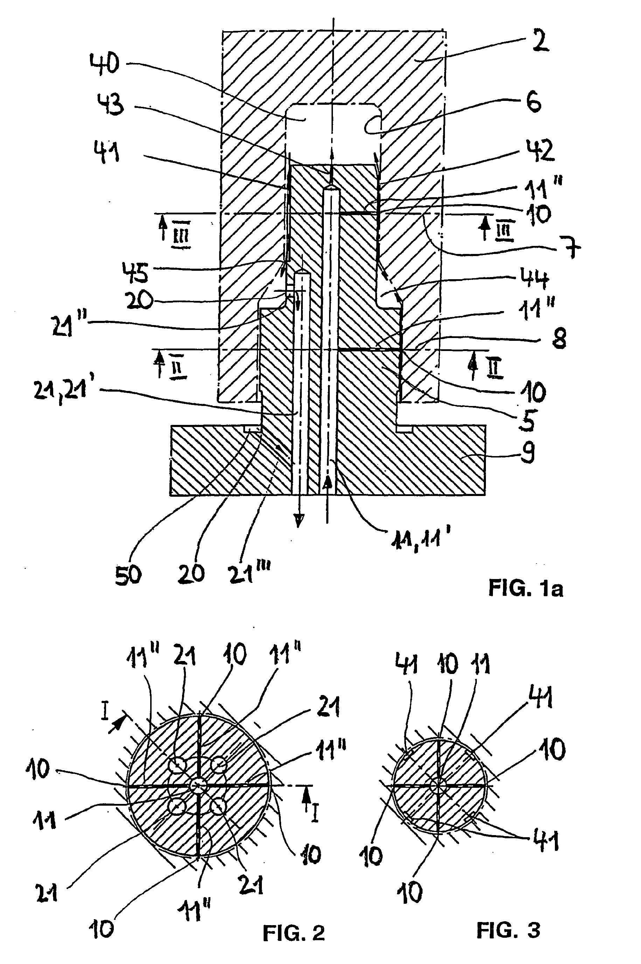

Die in Figur 1 dargestellte Lagerung 1 für einen zu untersuchenden Rotor 2, der in Figur 1 in strichpunktierten Linien dargestellt ist, ist an einer Schwingbrücke 3 einer Auswuchteinrichtung befestigt. Die Lagerung 1 weist einen Lagerdorn 5 auf, auf den der zu untersuchende bzw. auszuwuchtende Rotor 2 rotierbar aufgebracht wird. Die Schwingbrücke 3 ist in üblicher Weise über z.B. vier Stützfedern 4, von denen hier nur zwei dargestellt sind, schwingfähig gegen den Rahmen der Auswuchteinrichtung abgestützt. Der Rotor 2 wird von einem Antrieb, der hier nicht näher dargestellt ist, in Rotation versetzt. Unwuchtinduzierte Schwingungen des Lagerdorns bzw. der Schwingbrücke 3 werden gemessen und zur Bestimmung der am Rotor 2 auszugleichende Unwucht herangezogen.

Der Rotor 2 weist eine nicht durchgehende zentrale Rotorbohrung 6, also eine Sacklochbohrung auf, mittels der die Lagerung auf dem vertikal angeordneten Lagerdorn 5 erfolgt. Der Schwerpunkt S des Rotors 2 liegt in Achsrichtung außerhalb der Erstreckung der Sacklochbohrung, also außerhalb des Lagerbereichs. Die Sacklochbohrung ist gestuft und weist zwei Abschnitte unterschiedlichen Durchmessers auf. Der von der unteren Rotorstirnseite ausgehende Abschnitt ist ebenso wie der am Ende der Sacklochbohrung liegende Abschnitt zur hydrostatischen Abstützung des Rotors 2 mittels Lagerungsfluid in einem ersten Bereich in radialer Richtung auf dem Lagerdorn 5 vorgesehen. Die Abstützung des Rotors 2 mittels Lagerungsfluid in einem zweiten Bereich in axialer Richtung erfolgt über ein Fluidpolster in einer Fluidkammer 40, die zwischen der Stirnfläche des Lagerdorns 5 und dem Ende der Sacklochbohrung ausgebildet ist.

Als Lagerungsfluid wird im ersten und zweiten Lagerbereich in diesem Ausführungsbeispiel Öl oder eine ölhaltige Flüssigkeit oder ein anderes zur Flüssigkeitsschmierung geeignetes Fluid verwendet.

Der Lagerdorn 5 weist an seiner Oberfläche erste Öffnungen 10 (Figur 2, Figur 3) zum Durchtritt von Lagerungsfluid auf, die mit einer Fluid-Zuführleitung 11 im Lagerdorninneren verbunden sind, sowie zweite Öffnungen 20 zum Durchtritt von Lagerungsfluid, die mit Fluid-Abführleitungen 21 im Lagerdorninneren verbunden sind. Weiterhin weist der Lagerdorn 5 eine dritte Öffnung an seiner oberen Stirnseite auf, die mit der Fluid-Zuführleitung 11 in Verbindung steht.

Die ersten Öffnungen 10 liegen in zwei axial beabstandeten Lagerebenen 7, 8 im ersten Bereich, die den beiden Abschnitten der Sacklochbohrung des Rotors 2 zugeordnet sind und in denen der Rotor 2 in radialer Richtung hydrostatisch abgestützt wird. Der Lagerdorn 5 weist am unteren Ende einen Bund 9 auf, mit dem er auf der Schwingbrücke 3 befestigt ist.

Die Fluidzufuhr für jede der beiden Lagerebenen 7, 8 des ersten Bereichs erfolgt über einen zentral verlaufenden Zuführ-Leitungsabschnitt 11', der mit radial verlaufenden und in den vier ersten Öffnungen 10 pro Lagerebene 7, 8 endenden Zuführ-Leitungsabschnitten 11" verbunden ist. Der zentral verlaufende Zuführ-Leitungsabschnitt 11' ist mit einer Fluidzufuhr verbunden, die vorzugsweise durch die Schwingbrücke 3 verläuft, die aber auch im Bund 9 des Lagerdorns 5 vorgesehen werden kann.

Die Fluid-Zuführleitung 11 weist Drosselstrecken für die Zuführung des Fluids zu den Lagerebenen 7, 8 auf, die einen kleinen Querschnitt zwecks Drosselwirkung auf das Fluid aufweisen, wobei sich die Drosselwirkung auf einfache Weise neben dem gewählten Querschnitt noch über die Länge der Drosselstrecke einstellen läßt. Hierzu kann z.B. der zentral in der Lagerdornachse verlaufende Zuführ-Leitungsabschnitt 11' mit einem Drosselabschnitt versehen sein. Im dargestellten Ausführungsbeispiel ist vorgesehen, daß lediglich die den Öffnungen 10 zugeordneten radial verlaufenden Leitungsabschnitte 11 " eine Drosselwirkung aufweisen.

Zur Fluidabfuhr sind vier äquidistant auf einem Teilkreis verteilte, parallel zur Dornachse verlaufende nicht durchgehende Bohrungen 21 vorgesehen, die in mehreren Querschnittsebenen mit jeweils einer Öffnung 20 am Lagerdornumfang über Radialbohrungen 21" bzw. Fluidkanäle 21"' in Verbindung stehen. Die jeweils einer Bohrung 21 zugeordneten Öffnungen 20 liegen z. B. hintereinander auf einer parallel zur Lagerdornachse verlaufenden Mantellinie. In einer Querschnittsebene zwischen den Lagerebenen 7, 8 befinden sich mehrere, in diesem Fall vier Öffnungen 20 zur Fluidabfuhr, von denen jeweils eine über eine Radialbohrung 21" mit der nächstliegenden Bohrung 21 in Verbindung steht. Am Ansatz des Bundes 9 am Lagerdorn 5 befinden sich in einer ringförmigen Vertiefung 50 weitere vier Öffnungen 20 zur Fluidabfuhr, von denen jeweils eine über radial und schräg verlaufende Fluidkanäle 21"' mit der nächstliegenden Bohrung 21 in Verbindung steht. Die vier Bohrungen 21 enden in einer an der unteren Stirnfläche des Lagerdorns 5 angeordneten Ringkammer 16. Die Ringkammer 16 ist mit einer Fluidabsaugung verbunden. Die Ringkammer 16 ist wie dargestellt vorzugsweise in der Schwingbrücke 3 angeordnet, kann aber auch im Bund 9 des Lagerdorns 5 vorgesehen werden.

Zur Abstützung des Rotors 2 in Achsrichtung in dem zweiten Bereich über ein Fluidpolster in der Fluidkammer 40 erfolgt die Fluidzufuhr in die Fluidkammer 40 über einen Zuströmkanal, der den Ringspalt 42 zwischen Lagerdornaußenumfang und zugeordneter Bohrungswandung umfaßt. Im dargestellten Ausführungsbeispiel umfaßt der Zuströmkanal ferner eine Bohrung 43 kleinen Querschnitts, die von der zentralen Fluid-Zuführleitung 11 ausgeht und in der Stirnfläche des Lagerdorns 5 mündet.

Die Fluidkammer 40 ist über einen Abströmkanal, der im dargestellten Ausführungsbeispiel durch eine Längsnut 41 am Außenumfang des Lagerdorns 5 gebildet ist, mit der zweiten Öffnung 20 im Lagerdorn 5 verbunden. Der Abströmkanal mündet in einen Ringraum 44, der einerseits durch einen Übergangsabschnitt zwischen einem ersten oberen und einem zweiten unteren Abschnitt der Sacklochbohrung und andererseits durch einen Übergangsabschnitt zwischen dem oberen und unteren Abschnitt des Lagerdorns 5 gebildet ist. Im Ringraum 44 endet die Fluid-Abführleitung 21 mit der Öffnung 20.

Die ringförmige Kante zwischen dem Übergangsabschnitt der Sacklochbohrung und dem oberen Abschnitt der Sacklochbohrung bildet eine Steuerkante 45, die bei Verschiebung des Rotors 2 auf dem Lagerdorn 5 den Querschnitt der Abströmöffnung der Längsnut 41 in den Ringraum 44 verändert. Erhöht sich der Fluiddruck in der Druckkammer 40 über einen Grenzdruck, öffnet die Steuerkante 45 durch Axialverschiebungen des Rotors 2 die Abströmöffnung und regelt auf diesen Grenzdruck ein. Der Grenzdruck ist der Druck, bei dem der Rotor 2 auf dem Lagerdorn 5 eine in Achsrichtung unveränderliche Lage einnimmt. Beim Auswuchten von Rotoren gleicher Bauform aber unterschiedlichen Materials, z.B. aus einer Stahl- oder einer Titanlegierung, ist der Grenzdruck aufgrund des unterschiedlichen Rotorgewichts unterschiedlich, während die in Achsrichtung unveränderliche Lage des Rotors auf dem Lagerdorn bei beiden Rotormaterialien nahezu gleich ist.

Die Zuführ-Öffnungen 10 in den Lagerbereichen können in Zahl und Anordnung von den beschriebenen Ausführungen abweichen wobei eine Mindestzahl von drei erforderlich ist. Die Drosselwirkung wird in Abhängigkeit von Rotorform und Rotorgewicht sowie vom verwendeten Fluid festgelegt.

Die Zahl und Anordnung der Abführ-Öffnungen 20 ist beispielhaft. Sie richtet sich nach dem verwendeten Fluid und der Ausgestaltung des Rotors und der Lagerung.

Anstelle der Längsnut 41 kann in nicht dargestellter Weise eine von der Stirnfläche des Lagerdorns 5 ausgehende und am Außenumfang des Lagerdorns 5 mündende Abströmbohrung vorgesehen sein, deren Abströmöffnung in der zuvor beschriebenen Weise von der Steuerkante 45 regelbar ist.

Bei der Lagerung des Rotors 2 im zweiten Bereich, also der Abstützung in Achsrichtung über ein Fluidpolster, kann es sich als vorteilhaft erweisen, statt einer Flüssigkeit ein gasförmiges Medium, vorzugsweise Luft als Fluid zu verwenden. Die Abstützung in radialer Richtung über eine Flüssigkeit ist relativ steif, während die Abstützung in axialer Richtung über ein Luftpolster nachgiebiger ist.

Die Orientierung der Lagerdornachse, z.B. vertikal oder eine zur Horizontalen geneigte Orientierung, kann unter Berücksichtigung der Ausgestaltung der Auswuchteinrichtung und der Zuführweise der Rotoren, z.B. mit automatisierter Ein- und Auslagerung, festgelegt werden.

Die auf der Schwingbrücke angeordnete Lagerung ermöglicht alle Meßverfahren zur Bestimmung der Unwucht nach Lage und Größe. Die Abstützung der Schwingbrücke kann für unterkritischen oder überkritischen Betrieb ausgebildet sein.

Die Erfindung ist nicht eingeschränkt auf die Untersuchung von Rotoren mit Sacklochbohrungen. Es können alle Rotoren ohne eigene Lagerzapfen, die Sacklochbohrungen oder durchgehende Bohrungen aufweisen, wie beispielsweise Verdichterräder, Schwungräder etc. ausgewuchtet werden. Durchgehende Bohrungen werden zum Auswuchtvorgang mit einem Verschlußstopfen verschlossen, so daß sich nach dem Aufsetzen des Rotors auf den Lagerdorn eine abgeschlossene Fluidkammer bilden kann.

Die Ausgestaltung des Lagerdorns richtet sich im einzelnen nach dem auszuwuchtenden Rotor, insbesondere nach der Form der Sacklochbohrung oder der durchgehenden Bohrung des Rotors.

## Patentansprüche

1. Verfahren zum Auswuchten von zapfenlosen Rotoren, bei dem der eine Bohrung (6) aufweisende Rotor (2) auf einem Lagerdorn (5) einer Auswuchteinrichtung angeordnet und Fluid zwischen einander gegenüberliegende Rotor- und Lagerdornflächen gebracht wird und der Rotor (2) in Drehung versetzt wird, wobei unwuchtinduzierte Schwingungen des Lagerdorns (5) zur Bestimmung der Unwucht herangezogen werden, **dadurch gekennzeichnet, daß** der Rotor (2) in einem ersten Lagerbereich in Radialrichtung mittels einer Flüssigkeit abgestützt wird und daß bei der Lagerung eines eine Sacklochbohrung aufweisenden Rotors (2) dieser in einem zweiten Lagerbereich durch Fluidversorgung einer zwischen dem Ende der Sacklochbohrung und dem Lagerdornende angeordneten Fluidkammer (40) in einer vorgebbaren axialen Lage auf dem Lagerdorn (5) abgestützt wird.

2. Verfahren nach Anspruch 1, **dadurch gekennzeichnet, daß** die vorgebbare axiale Lage des Rotors (2) auf dem Lagerdorn (5) durch Änderung des Volumens der Fluidkammer (40) eingestellt wird.

3. Verfahren nach Anspruch 1 oder Anspruch 2, **dadurch gekennzeichnet, daß** das Volumen der Fluidkammer (40) durch Druckaufbau in der Fluidkammer (40) geändert wird.

4. Verfahren nach Anspruch 3, **dadurch gekennzeichnet, daß** bei einem mit zur Horizontalebene geneigter Achse gelagerten Rotor (2) die axiale Lage des Rotors (2) auf dem Lagerdorn (5) durch den sich in der Fluidkammer (40) einstellenden Druck aufgrund der Gewichtskomponente des Rotors (2) und des Drucks der Fluidversorgung bestimmt wird, wobei der Druck in der Fluidkammer (40) auf einen vorgebbaren Wert begrenzt wird.

5. Verfahren nach Anspruch 4, **dadurch gekennzeichnet, daß** zumindest ein Abströmkanal zwischen zugeordneten Rotor- und Lagerdornflächen vorgesehen wird, dessen Strömungsquerschnitt zur Druckbegrenzung verändert wird.

6. Verfahren nach einem der vorhergehenden Ansprüche, **dadurch gekennzeichnet, daß** die Abstützung im ersten und zweiten Lagerbereich mittels einer Flüssigkeit, vorzugsweise einer Öl- oder ölhaltigen Flüssigkeit als Fluid vorgenommen wird.

7. Lagerung mit einem Lagerdorn (5) zum Lagern eines zapfenlosen, eine Bohrung aufweisenden Rotors (2) in einer Auswuchteinrichtung in zumindest einem ersten und einem zweiten Lagerbereich, wobei der Lagerdorn (5) Öffnungen für den Durchtritt von Fluid aufweist, **dadurch gekennzeichnet, daß** im Lagerdorn erste Öffnungen (10) zur Fluidzufuhr und zumindest eine zweite Öffnung (20) zur Fluidabfuhr vorgesehen sind, daß die Lagerung bei der Lagerung eines eine Sacklochbohrung aufweisenden Rotors (2) eine zwischen dem Ende der Sacklochbohrung und dem Lagerdornende ausgebildete Fluidkammer (40) aufweist, die zumindest einen Zu- und einen Abströmkanal aufweist und daß der Lagerdorn (5) zumindest den Abströmkanal aufweist.

8. Lagerung nach Anspruch 7, **dadurch gekennzeichnet, daß** die ersten Öffnungen (10) an Lagerdornumfangsflächen im ersten Lagerbereich liegen.

9. Lagerung nach Anspruch 7 oder Anspruch 8, **dadurch gekennzeichnet, daß** die ersten Öffnungen (10) in zwei axial beabstandeten Lagerebenen (7, 8) des Lagerdorns (5) liegen.

10. Lagerung nach einem der Ansprüche 7 bis 9, **dadurch gekennzeichnet, daß** die zweite Öffnung (20) den Lagerebenen (7, 8) benachbart und/oder zwischen diesen angeordnet ist.

11. Lagerung nach einem der Ansprüche 7 bis 10, **dadurch gekennzeichnet, daß** der Zuströmkanal durch den Ringspalt (42) zwischen Lagerdornaußenumfang und Bohrungswandung und/oder eine in der Stirnfläche des Lagerdorns (5) endende Bohrung (43) gebildet ist.

12. Lagerung nach einem der Ansprüche 7 bis 11, **dadurch gekennzeichnet, daß** der Abströmkanal mit der zweiten Öffnung (20) verbindbar ist und durch zumindest eine von der Stirnfläche des Lagerdorns (5) ausgehende aussenliegende Längsnut (41) des Lagerdorns (5) und/oder Abströmbohrung gebildet ist.

13. Lagerung nach Anspruch 12, **dadurch gekennzeichnet, daß** die Abströmöffnung der die Fluidkammer (40) mit der zweiten Öffnung (20) im Lagerdorn (5) verbindenden Längsnut (41) und/oder Abströmbohrung von der Wandung der Rotorbohrung (6) überdeckbar ist.

14. Lagerung nach einem der Ansprüche 7 bis 13, **dadurch gekennzeichnet, daß** innerhalb der Sacklochbohrung ein Ringraum (44) zwischen Rotor (2) und Lagerdorn (5) ausgebildet ist, der mit dem Abströmkanal und der zweiten Öffnung (20) in Verbindung steht.

15. Lagerung nach Anspruch 14, **dadurch gekennzeichnet, daß** der Ringraum (44) einerseits durch einen Übergangsabschnitt zwischen einem ersten und einem zweiten Abschsnitt der Sacklochbohrung und andererseits durch einen Übergangsabschnitt zwischen einem ersten und einem zweiten Abschnitt des Lagerdorns (5) gebildet ist.

16. Lagerung nach Anspruch 15, **dadurch gekennzeichnet, daß** eine Steuerkante (45) zwischen dem Übergangsabschnitt und dem Abschnitt der Sacklochbohrung, in dem die Fluidkammer (40) liegt, ausgebildet ist.

## Claims

1. Method for balancing rotors without journals, in which the rotor (2), which has a bore (6), is arranged on a bearing mandrel (5) of a balancing device and fluid is brought between rotor and bearing mandrel faces located opposite one another and the rotor (2) is set into rotation, wherein oscillations of the bearing mandrel (5) induced by imbalance are drawn on to determine the imbalance, **characterised in that** the rotor (2) is supported in a first bearing region in the radial direction by means of a liquid and in the bearing arrangement of a rotor (2) which has a pocket hole bore it is supported in a second bearing region in a presettable axial position on the bearing mandrel (5) by supplying fluid to a fluid chamber (40) positioned between the end of the pocket hole bore and the end of the bearing mandrel.

2. Method according to claim 1, **characterised in that** the presettable axial position of the rotor (2) on the bearing mandrel (5) is set by changing the volume of the fluid chamber (40).

3. Method according to claim 1 or claim 2, **characterised in that** the volume of the fluid chamber (40) is changed by pressure build-up in the fluid chamber (40).

4. Method according to claim 3, **characterised in that** with a rotor (2) held with an axis inclined towards the horizontal plane, the axial position of the rotor (2) on the bearing mandrel (5) is determined by the pressure arising in the fluid chamber (40) owing to the weight component of the rotor (2) and the pressure of the fluid supply, the pressure in the fluid chamber (40) being limited to a presettable value.

5. Method according to claim 4, **characterised in that** at least one outlet channel is provided between associated rotor and bearing mandrel faces, the flow cross-section of which is changed to limit the pressure.

6. Method according to one of the preceding claims, **characterised in that** the support in the first and second bearing regions is performed by means of a liquid, preferably an oil or oily liquid as fluid.

7. Bearing arrangement with a bearing mandrel (5) for holding a rotor (2), without journals but having a bore, in a balancing device in at least one first and one second bearing region, the bearing mandrel (5) having orifices for the passage of fluid, **characterised in that** first orifices (10) for fluid supply and at least one second orifice (20) for fluid discharge are provided in the bearing mandrel, when holding a rotor (2) having a pocket hole bore the bearing arrangement has a fluid chamber (40) constructed between the end of the pocket hole bore and the end of the bearing mandrel, which has at least one inlet and one outlet channel and the bearing mandrel (5) has at least the outlet channel.

8. Bearing arrangement according to claim 7, **characterised in that** the first orifices (10) are located on bearing mandrel circumferential faces in the first bearing region.

9. Bearing arrangement according to claim 7 or claim 8, **characterised in that** the first orifices (10) are located in two bearing planes (7, 8) of the bearing mandrel (5) at an axial distance from one another.

10. Bearing arrangement according to one of the claims 7 to 9, **characterised in that** the second orifice (20) is arranged adjacent to the bearing planes (7, 8) and/or between them.

11. Bearing arrangement according to one of the claims 7 to 10, **characterised in that** the inlet channel is formed by the annular gap (42) between the outer circumference of the bearing mandrel and the wall of the bore and/or a bore (43) ending in the end face of the bearing mandrel (5).

12. Bearing arrangement according to one of the claims 7 to 11, **characterised in that** the outlet channel can be connected to the second orifice (20) and is formed by at least one exterior longitudinal groove (41) of the bearing mandrel (5) starting from the end face of the bearing mandrel (5) and/or an outlet bore.

13. Bearing arrangement according to claim 12, **characterised in that** the outlet orifice of the longitudinal groove (41) connecting the fluid chamber (40) to the second orifice (20) in the bearing mandrel (5) and/or the outlet bore can be covered by the wall of the rotor bore (6).

14. Bearing arrangement according to one of the claims 7 to 13, **characterised in that** inside the pocket hole bore an annular space (44) is constructed between the rotor (2) and the bearing mandrel (5), which is connected to the outlet channel and the second orifice (20).

15. Bearing arrangement according to claim 14, **characterised in that** the annular space (44) is formed on one side by a transition section between a first and a second section of the pocket hole bore and on the other side by a transition section between a first and a second section of the bearing mandrel (5).

16. Bearing arrangement according to claim 15, **characterised in that** a control edge (45) is formed between the transition section and the section of the pocket hole bore in which the fluid chamber (40) is located.

## Revendications

1. Procédé d'équilibrage de rotors sans tourillon, dans lequel le rotor (2) muni d'un alésage (6) est disposé sur une broche (5) d'un dispositif d'équilibrage, et un fluide est introduit entre les surfaces du rotor et de la broche qui se font face, et le rotor est mis en rotation, des vibrations de la broche (5) induites par un déséquilibre étant utilisées pour déterminer le déséquilibre, **caractérisé en ce que** le rotor (2) est soutenu par un liquide dans une première section de palier en direction radiale et **en ce qu'**en cas de logement d'un rotor (2) muni d'un trou borgne, celui-ci prend appui sur la broche (5) dans une position axiale pouvant être prédéfinie dans une deuxième section de palier par alimentation en fluide d'une cavité à fluide (40) située entre l'extrémité du trou borgne et l'extrémité de la broche.

2. Procédé selon la revendication 1, **caractérisé en ce que** la position pouvant être prédéfinie du rotor (2) sur la broche (5) est ajustée en modifiant le volume de la cavité à fluide (40).

3. Procédé selon la revendication 1 ou 2, **caractérisé en ce que** le volume de la cavité à fluide (40) est modifié par une montée en pression dans la cavité à fluide (40).

4. Procédé selon la revendication 3, **caractérisé en ce que** dans le cas d'un rotor (2) logé avec un axe incliné par rapport au plan horizontal, la position axiale du rotor (2) sur la broche (5) est déterminée par la pression s'établissant dans la cavité à fluide (40) en raison des composants de poids du rotor (2) et de la pression de l'alimentation en liquide, la pression dans la cavité à fluide (40) étant limitée à une valeur pouvant être prédéfinie.

5. Procédé selon la revendication 4, **caractérisé en ce qu'**il est prévu au moins un canal d'évacuation entre les surfaces correspondantes du rotor et de la broche, dont la section mouillée est modifiée pour limiter la pression.

6. Procédé selon l'une des revendications précédentes, **caractérisé en ce que** l'appui dans la première section et dans la deuxième section de palier est réalisé au moyen d'un liquide, de préférence un liquide huileux ou un liquide contenant de l'huile comme fluide.

7. Logement avec une broche (5) pour loger, dans une installation d'équilibrage, un rotor (2) sans tourillon et présentant un alésage dans au moins une première et une deuxième section de palier, la broche (5) présentant des ouvertures pour le passage de fluides, **caractérisé en ce qu'**il est prévu dans la broche des premières ouvertures (10) pour l'alimentation en fluide et au moins une deuxième ouverture (20) pour l'évacuation du fluide, **en ce que** le logement, lors du logement d'un rotor (2) muni d'un trou borgne, présente une cavité à fluide (40) formée entre l'extrémité du trou borgne et l'extrémité de la broche, laquelle cavité présente au moins un canal d'alimentation et un canal d'évacuation, et **en ce que** la broche (5) présente au moins un canal d'évacuation.

8. Logement selon la revendication 7, **caractérisé en ce que** les premières ouvertures (10) sont situées sur la surface circonférentielle de la broche au niveau de la première section de palier.

9. Logement selon la revendication 7 ou 8, **caractérisé en ce que** les premières ouvertures (10) sont situées dans deux plans de palier (7, 8) de la broche (5) distants l'un de l'autre axialement.

10. Logement selon l'une des revendications 7 à 9, **caractérisé en ce que** la deuxième ouverture (20) est disposée à proximité des plans de palier (7, 8) et/ou entre ceux-ci.

11. Logement selon l'une des revendications 7 à 10, **caractérisé en ce que** le canal d'alimentation est formé par la fente annulaire (42) entre la circonférence de la broche et la paroi du trou et/ou par une ouverture (43) finissant dans la face frontale de la broche (5).

12. Logement selon l'une des revendications 7 à 11, **caractérisé en ce que** le canal d'évacuation peut être relié à la deuxième ouverture (20) et est formé par au moins une gorge longitudinale (41) de la broche (5) partant de la face frontale de la broche (5) et située à l'extérieure et/ou par un alésage d'évacuation.

13. Logement selon la revendication 12, **caractérisé en ce que** l'ouverture d'évacuation de la gorge longitudinale (41) qui relie la cavité à fluide (40) à la deuxième ouverture (20) dans la broche (5) et/ou l'alésage d'évacuation peut être recouvert par la paroi de l'alésage de rotor (6).

14. Logement selon l'une des revendications 7 à 13, **caractérisé en ce qu'**un espace annulaire (44) est formé à l'intérieur de l'alésage borgne entre le rotor (2) et la broche (5), lequel espace est en liaison avec le canal d'évacuation et la deuxième ouverture (20).

15. Logement selon la revendication 14, **caractérisé en ce que** l'espace annulaire (44) est formé d'une part par une section de transition entre une première section et une deuxième section de l'alésage borgne et d'autre part par une section de transition entre une première section et une deuxième section de la broche (5).

16. Logement selon la revendication 15, **caractérisé en ce qu'**une arête de contrôle (45) est formée entre la section de transition et la section de l'alésage borgne dans lequel se trouve le la cavité de fluide (40).
